# EUROPEAN PATENT APPLICATION

(11) **EP 4 749 766 A1**
(43) Date of publication of application: **27.05.2026**
(21) Application number: 24858247.0
(22) Date of filing: 06.08.2024
(51) Int. Cl.: H01M 10/613

(54) **LIQUID COOLING SYSTEM, ENERGY STORAGE DEVICE, ENERGY STORAGE SYSTEM, AND CHARGING NETWORK**

(30) Priority: 25.08.2023 CN 202311086888
(71) Applicant: Huawei Digital Power Technologies Co., Ltd., Shenzhen, Guangdong 518043 (CN)
(72) Inventor: LI, Malin, Shenzhen, Guangdong 518043 (CN); LIU, Huan, Shenzhen, Guangdong 518043 (CN); LU, Jinhong, Shenzhen, Guangdong 518043 (CN)
(74) Representative: Maiwald GmbH
(86) International application number: PCT/CN2024/110166
(87) International publication number: WO 2025/044704

(57) **Abstract**

This application provides a liquid cooling system, an energy storage device, an energy storage system, and a charging network. The liquid cooling system includes a refrigerant loop, and the liquid cooling system further includes a thermal management module, a heat dissipation module, and a fluorine pump module. The thermal management module includes two liquid cooling interfaces and two cooling interfaces. The two liquid cooling interfaces are configured for a first working medium to flow between, the two cooling interfaces are configured for a second working medium to flow between, the two liquid cooling interfaces are configured to connect to a battery module, and the two cooling interfaces are connected in series to the refrigerant loop. The heat dissipation module includes two heat dissipation interfaces, and the two heat dissipation interfaces are connected in series to the refrigerant loop. The fluorine pump module includes two fluorine pump interfaces, the two fluorine pump interfaces are connected in series to the refrigerant loop, and the fluorine pump module is connected between the thermal management module and the heat dissipation module. Efficient and energy-saving thermal management can be performed on an energy storage device by using a modular structure design of a modular liquid cooling system.

## Description

### CROSS-REFERENCE TO RELATED APPLICATIONS

This application claims priority to Chinese Patent Application No. 202311086888.0, filed with the China National Intellectual Property Administration on August 25, 2023 and entitled "LIQUID COOLING SYSTEM, ENERGY STORAGE DEVICE, ENERGY STORAGE SYSTEM, AND CHARGING NETWORK", which is incorporated herein by reference in its entirety.

### TECHNICAL FIELD

This application relates to the field of energy storage device thermal management technologies, and in particular, to a liquid cooling system, an energy storage device, an energy storage system, and a charging network.

### BACKGROUND

With continuous development of green energy technologies, energy storage devices that can store and release electric energy are widely used. A large amount of heat is generated in charging and discharging processes of energy storage batteries. If the heat cannot be discharged in time, the energy storage batteries may be overheated, causing safety risks such as catching fire and explosion. Therefore, it is necessary to perform thermal management on the energy storage batteries, to ensure safety and stability of the energy storage batteries.

Currently, for battery thermal management of energy storage devices, a conventional air cooling manner cannot meet efficiency and space requirements.

### SUMMARY

According to a liquid cooling system, an energy storage device, an energy storage system, and a charging network provided in embodiments of this application, efficient and energy-saving thermal management can be performed on an energy storage device by using a modular structure design of a modular liquid cooling system.

According to a first aspect, this application provides a liquid cooling system. The liquid cooling system may be configured to perform thermal management on a battery module of an energy storage device. The liquid cooling system includes a refrigerant loop, and the refrigerant loop is configured for a second working medium to flow in. The liquid cooling system further includes a thermal management module, a heat dissipation module, and a fluorine pump module. The thermal management module includes two liquid cooling interfaces and two cooling interfaces. The two liquid cooling interfaces are configured for a first working medium to flow between, and the two liquid cooling interfaces are configured to connect to a load, so that a coolant loop for circulation of the first working medium can be formed between the thermal management module and the load. The two cooling interfaces are connected in series to the refrigerant loop, so that the second working medium can flow through the thermal management module through the two cooling interfaces. The first working medium may be considered as a coolant, and the second working medium may be considered as a refrigerant. When the first working medium and the second working medium flow through the thermal management module simultaneously, the first working medium and the second working medium can exchange heat in the thermal management module. The heat dissipation module includes two heat dissipation interfaces, the two heat dissipation interfaces are connected in series to the refrigerant loop, and the heat dissipation module can enable the second working medium to exchange heat with an external environment. The fluorine pump module includes two fluorine pump interfaces. The two fluorine pump interfaces are connected in series to the refrigerant loop. The fluorine pump module is connected between the thermal management module and the heat dissipation module. The fluorine pump assembly can improve a flow rate of the second working medium. In a running process of the liquid cooling system, the fluorine pump module may cooperate with the heat dissipation module, to heat or cool the load through heat exchange between the second working medium in the refrigerant loop and the first working medium in the coolant loop. This implements thermal management on the load. The fluorine pump module can further adapt to more types of refrigerants to be compatible with environmental protection evolution of a refrigerant.

The thermal management module, the heat dissipation module, and the fluorine pump module of the liquid cooling system are all of modular structures, and structures in the modules may implement structure integration and function integration. This implements an integrated design and facilitates spatial arrangement. Each module may be used as an independent functional unit, and can implement operations independently and connect to the coolant loop or the refrigerant loop through an interface to play a role through a combination. This improves thermal processing energy efficiency of the liquid cooling system. In addition, the fluorine pump assembly has advantages of high efficiency and energy saving. This helps further improve operating energy efficiency of the liquid cooling system.

In some possible implementations, the liquid cooling system further includes a compressor, and the compressor is connected between the thermal management module and the heat dissipation module. The compressor may cool or heat the second working medium in the refrigerant loop. The liquid cooling system further includes a reversing valve module to cooperate with the compressor, so that the compressor can cooperate with the fluorine pump module and the heat exchange module to implement different operating modes. The reversing valve module includes a first interface, a second interface, a third interface, and a fourth interface, the first interface and the second interface are connected to the refrigerant loop, the compressor is separately connected to the third interface and the fourth interface, and the reversing valve module is configured to control a flow direction of the second working medium.

Possibly, the reversing valve module includes a first bypass valve. One end of the first bypass valve is separately connected to the first interface and the third interface, and the other end of the first bypass valve is separately connected to the second interface and the fourth interface. It is equivalent to that the first bypass valve is connected in parallel to two ends of the compressor. The first bypass valve and the compressor provide two liquid flowing paths between the first interface and the second interface, and a flow direction and a path of the second working medium are adjusted through adjustment and control of the first bypass valve.

Further, the reversing valve module further includes a four-way valve. The four-way valve includes a first port, a second port, a third port, a fourth port, and a valve core. The first port is connected to the first interface, the second port is connected to the third interface, the third port is connected to the fourth interface, and the fourth port is connected to the second interface. The four-way valve has a first state and a second state, and the valve core is movably disposed in the four-way valve to control the four-way valve to switch between the first state and the second state. When the four-way valve is in the first state, the first port communicates with the second port, and the third port communicates with the fourth port. When the four-way valve is in the second state, the first port communicates with the fourth port, and the second port communicates with the third port. During specific implementation, the four-way valve may alternatively be implemented by using another structure and combination, provided that the liquid cooling system can switch between different operating modes according to a requirement.

In a possible implementation, the fluorine pump module includes a fluorine pump, and the fluorine pump is connected between the two fluorine pump interfaces. The fluorine pump can efficiently drive the second working medium to circularly exchange heat with the first working medium. This improves heat dissipation efficiency.

Further, the fluorine pump module may further include a second bypass valve, and two ends of the second bypass valve are respectively connected to the two fluorine pump interfaces. It is equivalent to that the second bypass valve is connected in parallel to two ends of the fluorine pump. When the liquid cooling system further includes another module that drives the second working medium to circulate, the fluorine pump module in which the fluorine pump cooperates with the second bypass valve can implement a bypass function of the fluorine pump.

In a possible implementation, the thermal management module includes a water pump and a first heat exchanger. The first heat exchanger includes a first pipeline and a second pipeline. The water pump and the first pipeline are connected in series between the two liquid cooling interfaces, and two ends of the second pipeline are respectively connected to the two cooling interfaces. When the first working medium flows through the first pipeline and the second working medium flows through the second pipeline, the first working medium may exchange heat with the second working medium, to implement heat exchange between the coolant loop and the refrigerant loop.

In a possible implementation, the thermal management module further includes a dehumidification module, and two ends of the dehumidification module are respectively connected to the two cooling interfaces. It may be considered that the dehumidification module is connected in parallel to two ends of the first heat exchanger, and when an air temperature in the energy storage device is lower than a dew point temperature, the dehumidification module can operate to condense water vapor in the energy storage device into water. This reduces humidity of the energy storage device.

A second throttle valve is disposed between the dehumidification module and the cooling interface that is configured to connect to the fluorine pump module, and the second throttle valve is configured to control a flow volume of the second working medium flowing through the dehumidification module.

In a possible implementation, the thermal management module further includes an electric heating assembly, and the electric heating assembly may be connected in series between the two liquid cooling interfaces to connect to the coolant loop. When the load needs to be heated, the first working medium may be directly heated by using the electric heating assembly.

In a possible implementation, a first throttle valve is disposed between the first heat exchanger and the cooling interface that is configured to connect to the fluorine pump module. The first throttle valve can adjust a flow volume of the second working medium flowing through the second pipeline.

In a possible implementation, the heat dissipation module includes a second heat exchanger and a fan, two ends of the second heat exchanger are respectively connected to the heat dissipation interfaces, and the fan is disposed on one side of the second heat exchanger. When the second working medium in the second heat exchanger exchanges heat with air in the external environment, starting the fan can increase a flow rate of external air. This improves heat exchange efficiency of the second heat exchanger.

According to a second aspect, this application provides an energy storage device. The energy storage device includes at least one battery module and any liquid cooling system provided in the first aspect. Two ends of each battery module are respectively connected to the two liquid cooling interfaces, and the battery module is equivalent to the load. The liquid cooling system can use different operating modes based on different ambient temperatures to perform thermal management on the battery module, and has advantages of high integration, energy saving, and high efficiency.

Specifically, each battery module includes a battery and a liquid cooling plate, a liquid inlet and a liquid outlet of the liquid cooling plate are respectively connected to the two liquid cooling interfaces, and the liquid cooling plate is in thermal contact with the battery. The coolant loop can be formed between the thermal management module of the liquid cooling system and the liquid cooling plate, and the first working medium can exchange heat with the battery when flowing through the liquid cooling plate, to achieve an objective of thermal management on the battery.

In a possible implementation, if the energy storage device is a device such as an electric cabinet, the energy storage device further includes a cabinet body, and the at least one battery module and the liquid cooling system are accommodated in the cabinet body.

According to a third aspect, this application further provides an energy storage system that includes the energy storage device provided in the second aspect. The energy storage system further includes a power generation device and a power conversion device. The power conversion device is connected between the power generation device and the energy storage device, and the power generation device is configured to store generated electric energy into the battery module of the energy storage device by using the power conversion device.

According to a fourth aspect, this application further provides a charging network. The charging network may include a charging pile and the energy storage device provided in the second aspect, the charging pile is electrically connected to the battery module in the energy storage device, and the battery module is configured to provide electric energy to the charging pile.

For technical effects that can be achieved by the second aspect to the fourth aspect, refer to descriptions of the technical effects that can be achieved by the corresponding design solutions in the first aspect. Details are not described herein again in this application.

### BRIEF DESCRIPTION OF DRAWINGS

FIG. 1a is a diagram of a structure of an energy storage device according to an embodiment of this application;
FIG. 1b is a diagram of a structure of an energy storage device according to an embodiment of this application;
FIG. 2a is a simplified diagram of a structure of an energy storage device according to Embodiment 1 of this application;
FIG. 2b is a diagram of a structure of an energy storage device according to Embodiment 1 of this application;
FIG. 2c is a simplified diagram of a structure of an energy storage device according to Embodiment 1 of this application;
FIG. 3a is a diagram of a structure of an energy storage device according to Embodiment 1 of this application;
FIG. 3b is a diagram of a structure of an energy storage device according to Embodiment 1 of this application;
FIG. 3c is a diagram of a structure of an energy storage device according to Embodiment 1 of this application;
FIG. 4a is a diagram of a flowing path of an energy storage device in Operating mode 1 according to Embodiment 1 of this application;
FIG. 4b is a diagram of a flowing path of an energy storage device in Operating mode 2 according to Embodiment 1 of this application;
FIG. 5 is a simplified diagram of a structure of an energy storage device according to Embodiment 2 of this application;
FIG. 6 is a diagram of a structure of an energy storage device according to Embodiment 2 of this application;
FIG. 7a is a diagram of a flowing path of an energy storage device in Operating mode 1 according to Embodiment 2 of this application;
FIG. 7b is a diagram of a flowing path of an energy storage device in Operating mode 2 according to Embodiment 2 of this application;
FIG. 7c is a diagram of a flowing path of an energy storage device in Operating mode 3 according to Embodiment 2 of this application;
FIG. 7d is a diagram of a flowing path of an energy storage device in Operating mode 4 according to Embodiment 2 of this application;
FIG. 8a is a diagram of a structure of an energy storage device according to Embodiment 3 of this application;
FIG. 8b is a diagram of a structure in which a four-way valve in an energy storage device is in a first state according to Embodiment 3 of this application;
FIG. 8c is a diagram of a structure in which a four-way valve in an energy storage device is in a second state according to Embodiment 3 of this application;
FIG. 9a is a diagram of a flowing path of an energy storage device in Operating mode 1 according to Embodiment 3 of this application;
FIG. 9b is a diagram of a flowing path of an energy storage device in Operating mode 2 according to Embodiment 3 of this application;
FIG. 9c is a diagram of a flowing path of an energy storage device in Operating mode 3 according to Embodiment 3 of this application;
FIG. 9d is a diagram of a flowing path of an energy storage device in Operating mode 4 according to Embodiment 3 of this application;
FIG. 10a is a diagram of a structure for implementing a four-way valve function in an energy storage device according to Embodiment 3 of this application;
FIG. 10b is a diagram of an operating principle for implementing a four-way valve function in an energy storage device according to Embodiment 3 of this application;
FIG. 10c is a diagram of an operating principle for implementing a four-way valve function in an energy storage device according to Embodiment 3 of this application;
FIG. 11a is a diagram of a structure for implementing a four-way valve function in an energy storage device according to Embodiment 3 of this application;
FIG. 11b is a diagram of an operating principle for implementing a four-way valve function in an energy storage device according to Embodiment 3 of this application;
FIG. 11c is a diagram of an operating principle for implementing a four-way valve function in an energy storage device according to Embodiment 3 of this application;
FIG. 12a is a diagram of a structure of an energy storage device according to Embodiment 4 of this application;
FIG. 12b is a diagram of a structure of an energy storage device according to Embodiment 4 of this application;
FIG. 13 is a diagram of a structure of an energy storage cabinet according to an embodiment of this application;
FIG. 14 is a block diagram of a structure of an energy storage system according to an embodiment of this application; and
FIG. 15 is a block diagram of a structure of a charging network according to an embodiment of this application.

### DESCRIPTION OF EMBODIMENTS

Battery thermal management of energy storage systems is an important measure to ensure safety and stability of energy storage batteries. A conventional air cooling manner cannot meet requirements for energy storage efficiency and device space. With development of technologies, liquid cooling circulation heat dissipation is applied to battery thermal management of the energy storage systems. However, current liquid cooling systems have problems of low integration and insufficient energy efficiency of thermal management.

In view of this, embodiments of this application provide a liquid cooling system, an energy storage device, an energy storage system, and a charging network that can be used in battery thermal management in an energy storage device, to improve liquid cooling energy efficiency by adding a fluorine pump module. The liquid cooling system uses a modular structure design, so that each module can be used as an independent functional unit. This facilitates structure integration and space design, and improves thermal management energy efficiency of the system.

To make objectives, technical solutions, and advantages of this application clearer, the following further describes this application in detail with reference to the accompanying drawings.

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized.

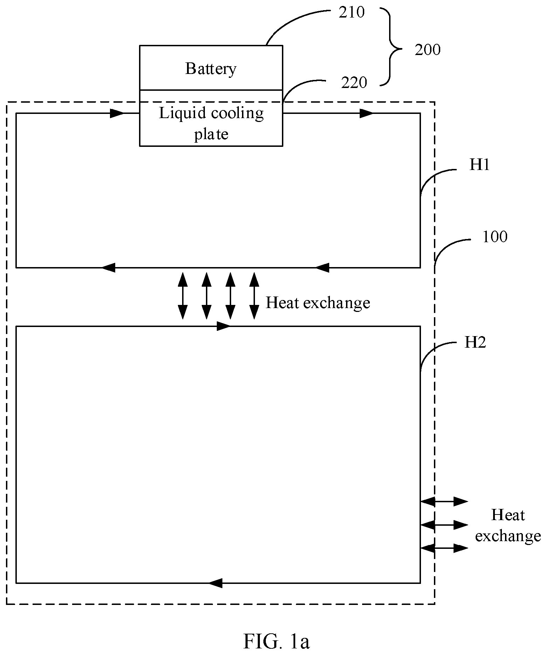

An embodiment of this application provides an energy storage device. FIG. 1a shows a simple architecture of the energy storage device. The energy storage device includes a battery module 200 and a liquid cooling system 100 that is configured to perform liquid cooling heat dissipation on the battery module 200. The battery module 200 may be considered as all loads on which thermal management is performed by the liquid cooling system 100. The battery module 200 includes a battery 210 and a liquid cooling plate 220 in thermal contact with the battery 210. The energy storage device specifically includes a coolant loop H1 and a refrigerant loop H2. A first working medium circulates in the coolant loop H1, the liquid cooling plate 220 of the battery module 200 communicates with the coolant loop H1, the coolant loop H1 can circularly provide the first working medium for the liquid cooling plate 220, and the first working medium may exchange heat with the battery module 200 by using the liquid cooling plate 220, to perform thermal management on the battery 210. A second working medium circulates in the refrigerant loop H2, and the second working medium can exchange heat with an external environment. The first working medium in the coolant loop H1 exchanges heat with the second working medium in the refrigerant loop H2, to implement thermal management on the battery 210. Herein, the liquid cooling plate 220 may alternatively be another type of heat exchanger such as an immersion heat exchanger. When the liquid cooling plate 220 is an immersion heat exchanger, the battery 210 and the liquid cooling plate 220 may be disposed in an integrated manner. In other words, the battery 210 may be immersed in the first working medium in the liquid cooling plate 220.

It should be understood that a flow direction of the first working medium in the coolant loop H1 and a flow direction of the second working medium in the refrigerant loop H2 in FIG. 1a are merely examples. The first working medium may be considered as a coolant, and the second working medium may be considered as a refrigerant.

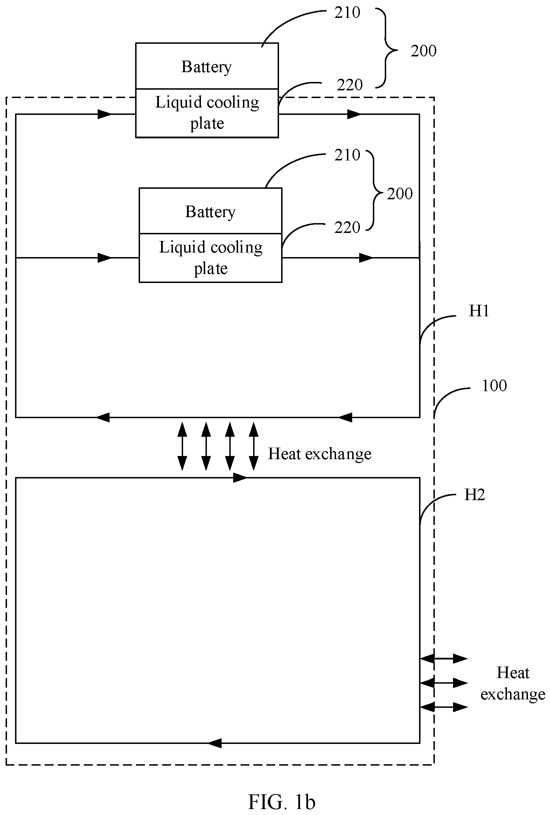

One or more battery modules 200 may be disposed. In other words, the energy storage device provided in this embodiment of this application may perform thermal management on one battery module 200, or may perform thermal management on a plurality of battery modules 200. When there are two, three, or more battery modules 200, liquid cooling plates 220 of the plurality of battery modules 200 may be connected in parallel to the coolant loop H1 of the liquid cooling system 100. FIG. 1b shows a scenario in which the liquid cooling system 100 simultaneously performs thermal management on two battery modules 200.

Based on basic architectures of the energy storage devices shown in FIG. 1a and FIG. 1b, the liquid cooling system 100 in the energy storage device provided in embodiments of this application may be implemented in a plurality of manners. The following describes examples by using specific embodiments.

### Embodiment 1

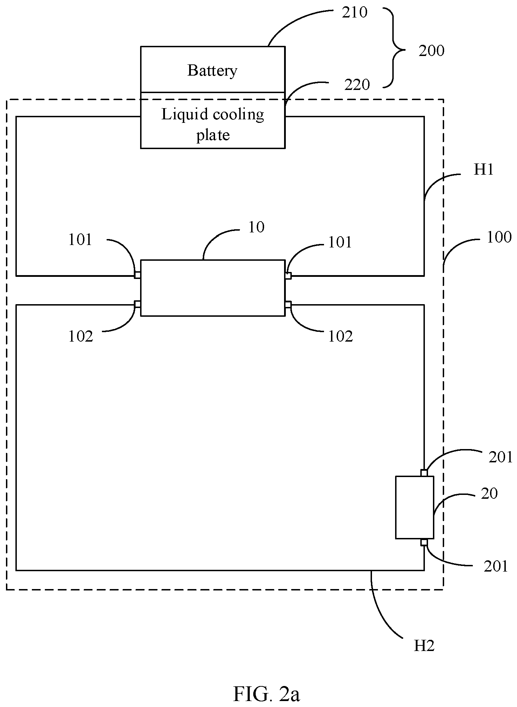

As shown in FIG. 2a, in an energy storage device provided in this embodiment of this application, an example in which a liquid cooling system 100 performs thermal management on one battery module 200 is used. The energy storage device includes a coolant loop H1 and a refrigerant loop H2. Structures and principles of the coolant loop H1 and the refrigerant loop H2 are shown in FIG. 1a and FIG. 1b. The liquid cooling system 100 includes a thermal management module 10 and a heat dissipation module 20. The thermal management module 10 includes two liquid cooling interfaces 101 and two cooling interfaces 102. The two liquid cooling interfaces 101 are connected in series to the coolant loop H1, and a first working medium in the coolant loop H1 may flow through the thermal management module 10 between the two liquid cooling interfaces 101. The two cooling interfaces 102 are connected in series to the refrigerant loop H2, and a second working medium in the refrigerant loop H2 may flow through the thermal management module 10 between the two cooling interfaces 102. The thermal management module 10 is configured for heat exchange between the coolant loop H1 and the refrigerant loop H2. In other words, the first working medium and the second working medium may exchange heat when flowing through the thermal management module 10. The heat dissipation module 20 includes two heat dissipation interfaces 201. The two heat dissipation interfaces 201 are connected in series to the refrigerant loop H2, and the second working medium in the refrigerant loop H2 may flow through the heat dissipation module 20 between the two heat dissipation interfaces 201. The heat dissipation module 20 is configured for heat exchange between the refrigerant loop H2 and an environment. In other words, the second working medium may exchange heat with an external environment at the heat dissipation module 20.

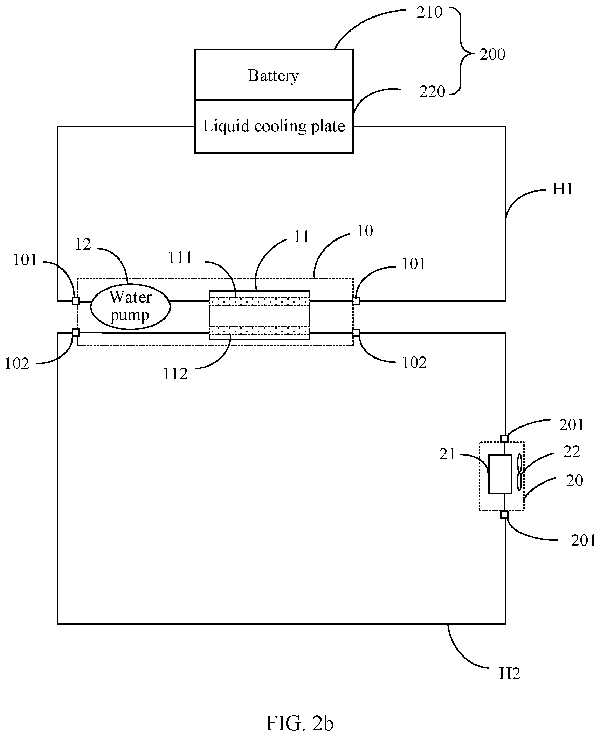

Specifically, as shown in FIG. 2b, the thermal management module 10 includes a water pump 12 and a first heat exchanger 11. The first heat exchanger 11 includes a first pipeline 111 and a second pipeline 112. The water pump 12 and the first pipeline 111 are connected in series between the two liquid cooling interfaces 101. In other words, the water pump 12 and the first pipeline 111 may be connected to the coolant loop H1 through the two liquid cooling interfaces 101, and the first working medium in the coolant loop H1 may flow through the first pipeline 111 and the water pump 12. Two ends of the second pipeline 112 are respectively connected to the two cooling interfaces 102. In other words, the second pipeline 112 may be connected to the refrigerant loop H2 through the two cooling interfaces 102, and the second working medium in the refrigerant loop H2 may flow through the second pipeline 112. When the first working medium flows through the first pipeline 111 and the second working medium flows through the second pipeline 112, the first working medium may exchange heat with the second working medium, to implement heat exchange between the coolant loop H1 and the refrigerant loop H2. Herein, the first heat exchanger 11 implements liquid-liquid heat exchange by using a structure.

The heat dissipation module 20 includes a second heat exchanger 21 and a fan 22. Two ends of the second heat exchanger 21 are respectively connected to the two heat dissipation interfaces 201. In other words, the second heat exchanger 21 may be connected to the refrigerant loop H2 through the two heat dissipation interfaces 201, and the second working medium in the refrigerant loop H2 may flow through the second heat exchanger 21. The fan 22 is disposed on an outer side of the second heat exchanger 21, and may be specifically located on a side that is of the heat dissipation module 20 and that faces external space. When the second working medium in the second heat exchanger 21 exchanges heat with air in the external environment, starting the fan 22 can increase a flow rate of external air. This improves heat exchange efficiency of the second heat exchanger 21. Herein, the second heat exchanger 21 implements air-liquid heat exchange by using a structure. It should be understood that a specific form of the second heat exchanger 21 may be one of structures such as a heater, a cooler, a condenser, and an evaporator according to a specific application scenario. For example, when a function of the second heat exchanger 21 is to transfer heat in the refrigerant loop H2 to the external environment, the second heat exchanger 21 may be specifically a condenser.

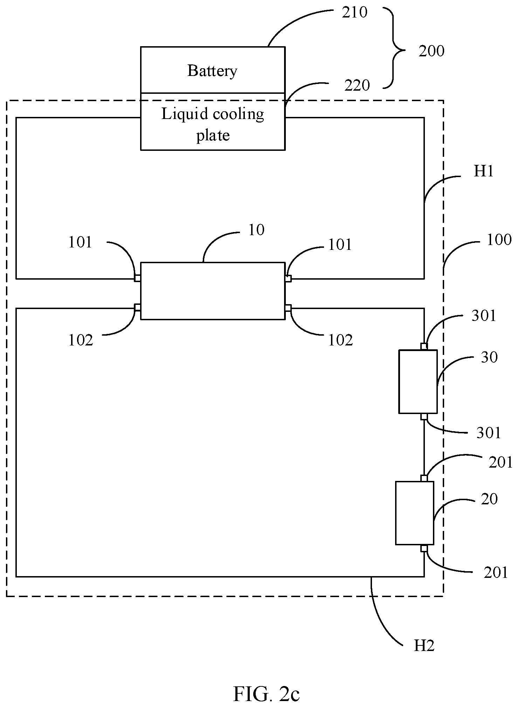

Based on the energy storage device shown in FIG. 2a, as shown in FIG. 2c, the liquid cooling system 100 includes the thermal management module 10, the heat dissipation module 20, and a fluorine pump module 30. The fluorine pump module 30 includes two fluorine pump interfaces 301. The two fluorine pump interfaces 301 are connected in series to the refrigerant loop H2. The fluorine pump module 30 is connected between the thermal management module 10 and the heat dissipation module 20. In some operating conditions, the fluorine pump module 30 can provide circulation power for the second working medium in the refrigerant loop H2. In an energy storage device shown in FIG. 2c, no example of a flow direction of the first working medium in the coolant loop H1 and a flow direction of the second working medium in the refrigerant loop H2 is provided.

With reference to a structure of the energy storage device shown in FIG. 2c, the thermal management module 10, the heat dissipation module 20, and the fluorine pump module 30 are all of modular structures. During specific implementation, structures in each module may be integrated into one housing in a physical structure form, and structures in the modules may implement structure integration and function integration. This implements an integrated design and facilitates matching and installation with another structure to perform proper spatial arrangement. Each module may be used as an independent functional unit, and can implement operations independently and connect to the coolant loop H1 or the refrigerant loop H2 through an interface to play a role through a combination. For the entire energy storage device, the liquid cooling system 100 may be arranged in a modular architecture, and an appropriate module is selected, according to different application scenarios and requirements, for matching and combination, to improve thermal processing energy efficiency of the liquid cooling system 100. In addition, the fluorine pump assembly 30 has advantages of high efficiency and energy saving in some operating conditions. This helps further improve operating energy efficiency of the liquid cooling system 100.

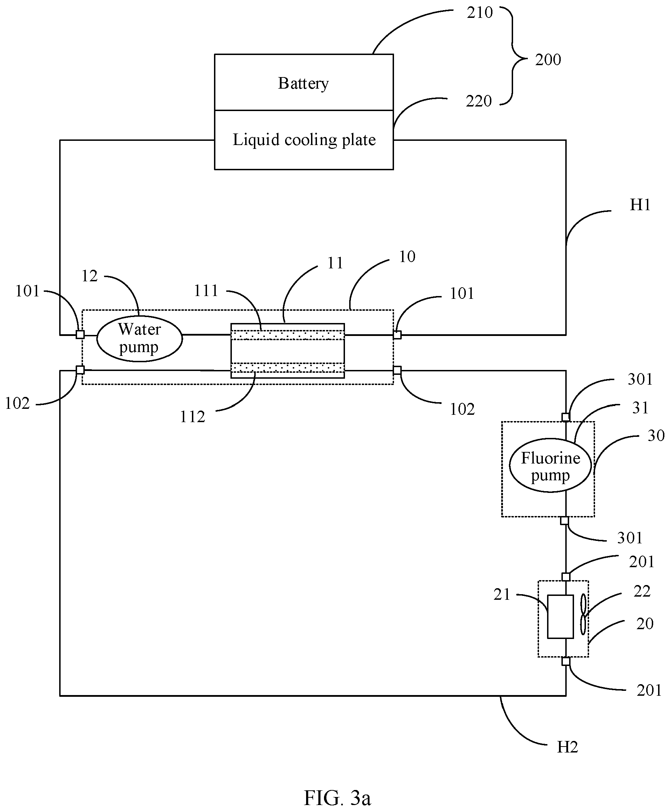

Based on the structure of the energy storage device shown in FIG. 2c, as shown in FIG. 3a, the fluorine pump module 30 includes a fluorine pump 31, and the fluorine pump 31 is connected between the two fluorine pump interfaces 301. The fluorine pump 31 can drive the second working medium that passes through the fluorine pump 31 to circulate in the refrigerant loop H2. In the refrigerant loop H2, a flow direction of the second working medium is not limited. The fluorine pump 31 has advantages of energy saving and high efficiency, and can efficiently drive the second working medium to circularly exchange heat with the first working medium. This improves efficiency of heat dissipation on the battery 210. The fluorine pump 31 has excellent corrosion resistance and high temperature resistance, can adapt to more types of refrigerants, and can be compatible with environmental protection evolution of a refrigerant.

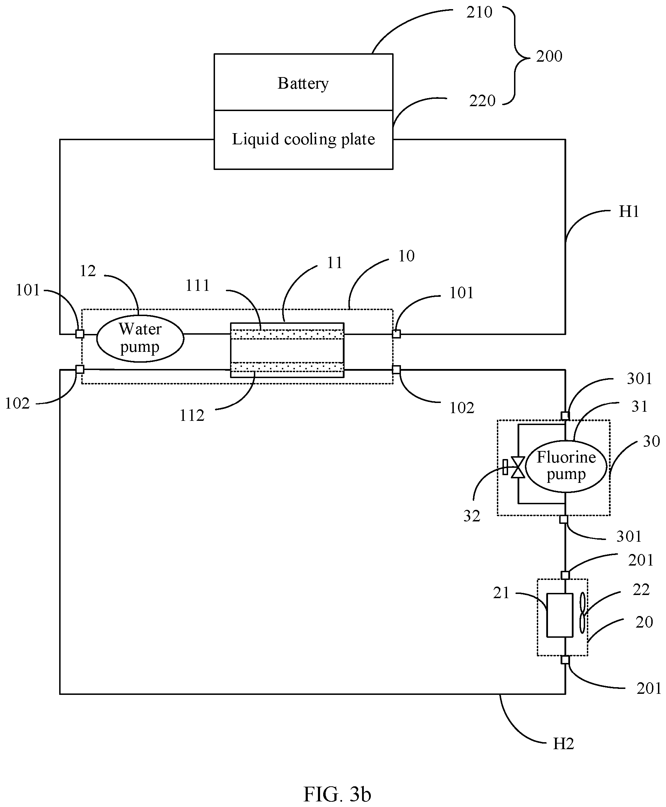

In some embodiments, as shown in FIG. 3b, the fluorine pump module 30 includes the fluorine pump 31 and a second bypass valve 32. The fluorine pump 31 and the second bypass valve 32 are connected in parallel between the two fluorine pump interfaces 301. Between the two fluorine pump structures 301 of the fluorine pump module 30, the fluorine pump 31 and the second bypass valve 32 each provide a liquid channel. In different operating conditions, the second bypass valve 32 may be turned on or turned off according to a requirement, to change a flowing path of the second working medium. Specifically, when the second bypass valve 32 is turned off, the second working medium can flow between the two fluorine pump interfaces 301 only by using the fluorine pump 31, and the fluorine pump 31 can increase a flow rate of the second working medium. When the second bypass valve 32 is turned on, the fluorine pump 31 may be turned off, and the second working medium can circulate by using the second bypass valve 32. When the liquid cooling system 100 further includes another module that drives the second working medium to circulate, the fluorine pump module 30 in which the fluorine pump 31 cooperates with the second bypass valve 32 can implement a bypass function of the fluorine pump 31. The second bypass valve 32 may be various valves with a stop function, such as a solenoid valve, a one-way valve, and a ball valve.

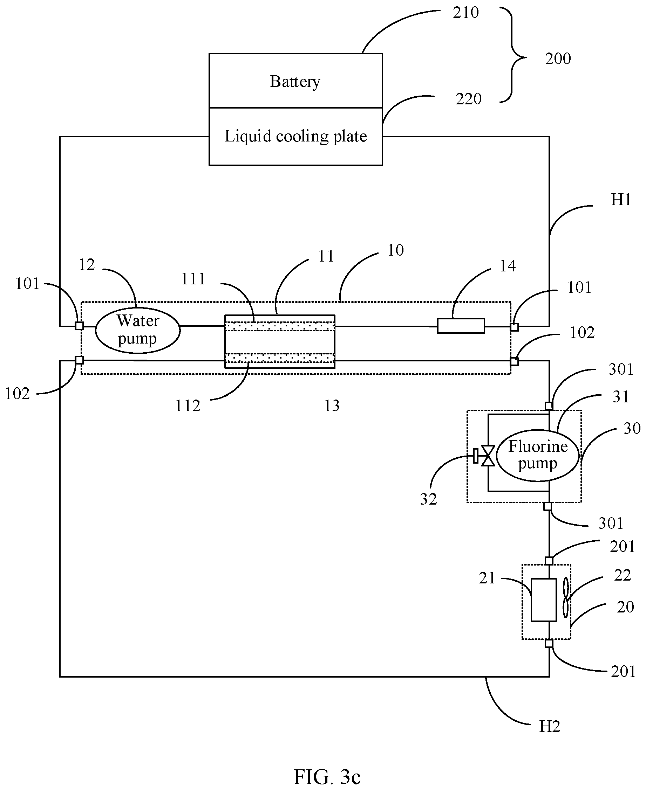

FIG. 3c shows a variant of the liquid cooling system 100 of the energy storage device. The thermal management module 10 further includes an electric heating assembly 14. The electric heating assembly 14 may specifically include a heating resistor. The heating resistor can heat the first working medium in the coolant loop H1 in a power-on state. For example, the electric heating assembly 14 is connected between the first heat exchanger 11 and one of the liquid cooling interfaces 101, and the liquid cooling interface 101 is located on a side away from the water pump 12. When an ambient temperature is low and the battery 210 needs to be heated, the electric heating assembly 14 may be started to heat the first working medium, and heat of the first working medium is transferred to the battery 210 by using the liquid cooling plate 220, to implement heating of the battery 210. Certainly, the electric heating assembly 14 may alternatively be disposed at any position of the coolant loop H1. When the electric heating assembly 14 is disposed on a side of a liquid inlet of the liquid cooling plate 220, efficiency of heating the battery 210 by the electric heating assembly 14 is higher.

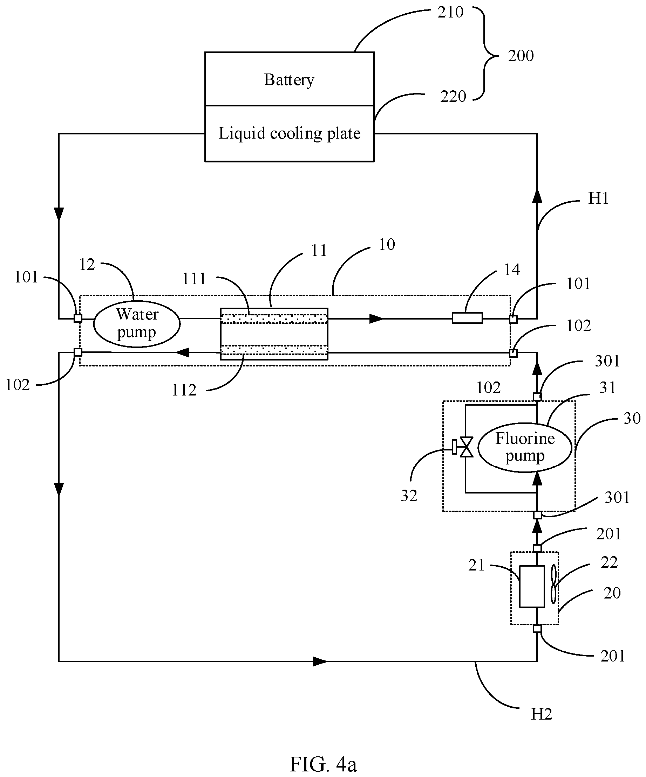

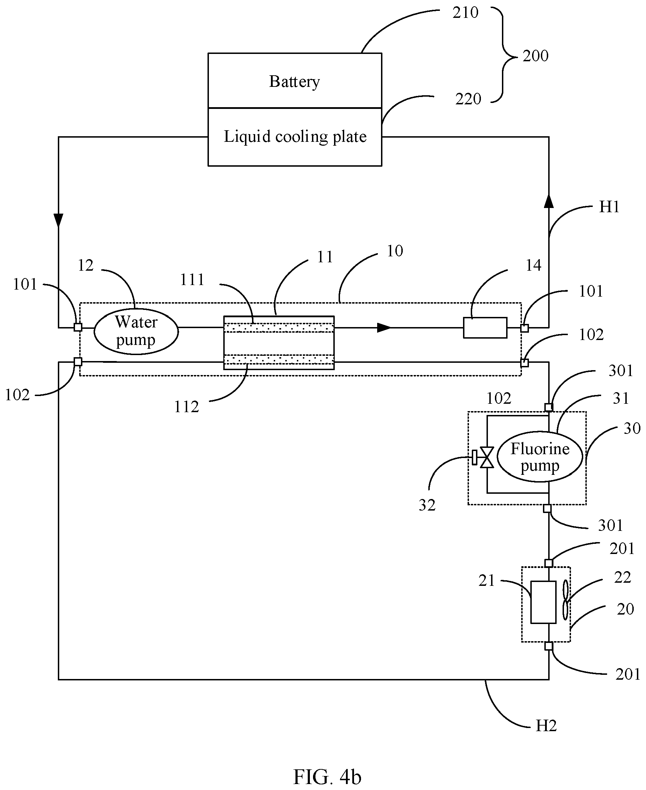

Based on the architectures of the energy storage device shown in FIG. 3a to FIG. 3c, the structure shown in FIG. 3c is used as an example, and an operating mode of the liquid cooling system 100 may be described by using examples with reference to FIG. 4a and FIG. 4b.

Operating mode 1: As shown in FIG. 4a, when an ambient temperature is moderate but heat dissipation needs to be performed on the battery 210, the liquid cooling system 100 may perform thermal management on the battery 210 through cooperation between the fluorine pump 31 in the fluorine pump module 30 and the heat dissipation module 20. Specifically, the water pump 12 is turned on, the electric heating assembly 14 is turned off, the first working medium in the coolant loop H1 circulates under driving of the water pump 12, and the first working medium takes away heat of the battery 210 by using the liquid cooling plate 220, to increase a temperature of the first working medium. The second bypass valve 32 is turned off, the second working medium in the refrigerant loop H2 circulates under driving of the fluorine pump 31, and the second working medium exchanges heat with the outside by using the second heat exchanger 21 and the fan 22. In the first heat exchanger 11, the first working medium in the first pipeline 111 and the second working medium in the second pipeline 112 exchange heat, to reduce a temperature of the first working medium. The second working medium takes away heat of the first working medium, the first working medium whose temperature is reduced continues to circulate through the coolant loop H1 and performs heat dissipation on the battery 210 by using the liquid cooling plate 220, and the second working medium whose temperature is increased continues to circulate through the refrigerant loop H2 and transfers heat to the external environment by using the second heat exchanger 21 and the fan 22, to implement heat dissipation on the battery 210. A flow direction of the first working medium in the coolant loop H1 in the first pipeline 111 is opposite to a flow direction of the second working medium in the refrigerant loop H2 in the second pipeline 112. In this operating mode, the liquid cooling system 100 can implement natural air cooling heat dissipation on the energy storage device through cooperation between the fluorine pump module 30 and the heat dissipation module 20. This saves energy and is efficient. In this operating mode, the structure of the second bypass valve 32 in the fluorine pump module 30 may be omitted.

Operating mode 2: As shown in FIG. 4b, when an external ambient temperature is low and the battery 210 needs to be heated, circulation of the second working medium in the refrigerant loop H2 ends. The water pump 12 is turned on, the electric heating assembly 14 is turned on, the first working medium in the coolant loop H1 circulates under driving of the water pump 12, the electric heating assembly 14 heats the first working medium in the coolant loop H1, and the first working medium whose temperature is increased heats the battery 210 by using the liquid cooling plate 220, to ensure that a temperature of the battery 210 is at a proper operating temperature. In this operating mode, the refrigerant loop H2 is closed, and the battery 210 is heated by using the electric heating assembly 14 in a low-temperature environment. This is simple and efficient.

### Embodiment 2

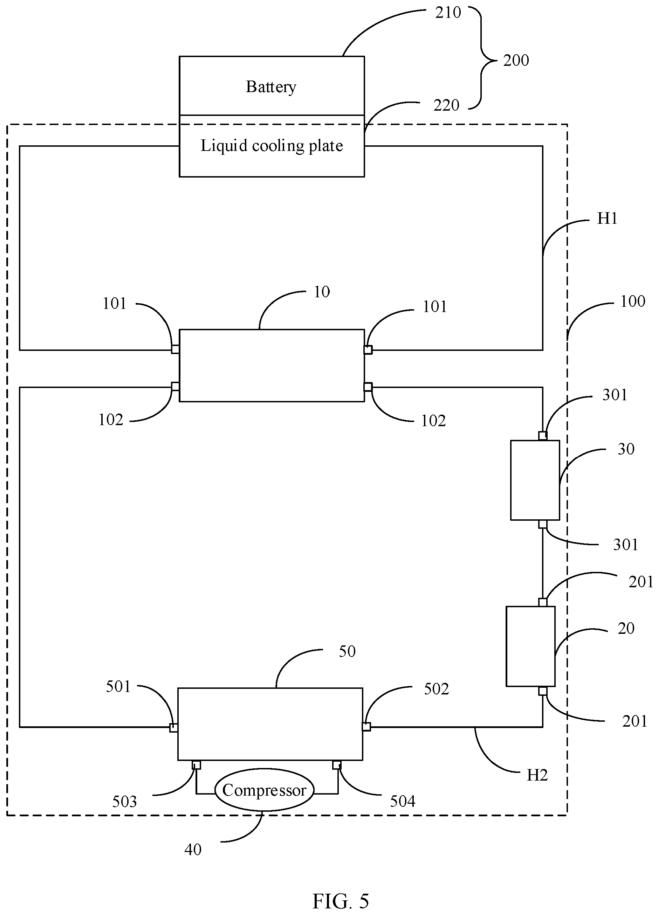

As shown in FIG. 5, in an energy storage device provided in this embodiment of this application, compared with the architecture shown in FIG. 2c, an architecture of the liquid cooling system 100 further includes a compressor 40, and the compressor 40 is connected between the thermal management module 10 and the heat exchange module 20. For example, the compressor 40 is connected between one end of the thermal management module 10 and the heat exchange module 20, and the fluorine pump module 30 is connected between the other end of the thermal management module 10 and the heat exchange module 20. The compressor 40 may cool the second working medium in the refrigerant loop H2, to reduce a temperature of the second working medium. Alternatively, the compressor 40 may heat the second working medium in the refrigerant loop H2, to increase a temperature of the second working medium. The thermal management module 10 further includes a first throttle valve 13. The first throttle valve 13 is connected between the second pipeline 112 of the first heat exchanger 11 and the cooling interface 102 that is configured to connect to the fluorine pump module 30. The first throttle valve 13 can adjust a flow volume of the second working medium flowing through the second pipeline 112. The liquid cooling system 100 further includes a reversing valve module 50. The reversing valve module 50 includes a first interface 501, a second interface 502, a third interface 503, and a fourth interface 504. The first interface 501 and the second interface 502 are connected to the refrigerant loop H2, the compressor 40 is separately connected to the third interface 503 and the fourth interface 504, and the reversing valve module 50 is configured to control a flow direction of the second working medium in the refrigerant loop H2. The compressor 40 may cool the second working medium in the refrigerant loop H2, to reduce a temperature of the second working medium. Alternatively, the compressor 40 may heat the second working medium in the refrigerant loop H2, to increase a temperature of the second working medium. The reversing valve module 50 is disposed to control a flow direction and a path of the second working medium in the compressor 40 and the refrigerant loop H2, so that the compressor 40 can perform different functions in different application scenarios.

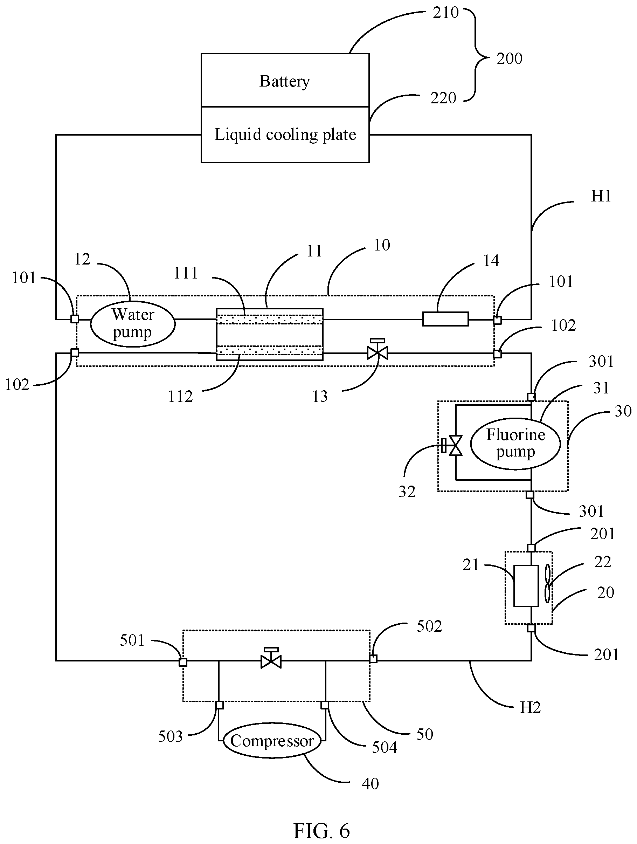

FIG. 6 is a diagram of a specific structure of an energy storage device, and the energy storage device in FIG. 6 is different from the energy storage device shown in FIG. 3c in that the compressor 40 and the reversing valve module 50 are added. The reversing valve module 50 includes a first bypass valve 51. One end of the first bypass valve 51 is separately connected to the first interface 501 and the third interface 503, and the other end of the first bypass valve 51 is separately connected to the second interface 502 and the fourth interface 504. The first bypass valve 51 and the compressor 40 provide two liquid flowing paths between the first interface 501 and the second interface 502. The second working medium in the refrigerant loop H2 can flow through the first bypass valve 51 through the first interface 501 and the second interface 502, and a flow direction and a path of the second working medium are adjusted through adjustment and control of the first bypass valve 51 and cooperation with the compressor 40. Herein, it is equivalent to that the first bypass valve 51 is connected in parallel to two ends of the compressor 40. The first bypass valve 51 may be various valves with a stop function, such as a solenoid valve, a one-way valve, and a ball valve.

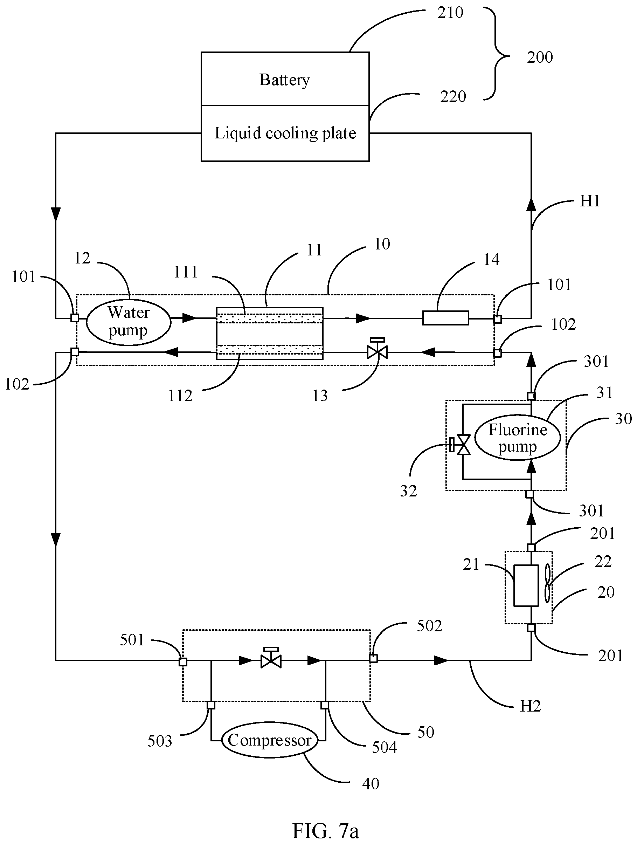

Based on the energy storage device shown in FIG. 6, an operating mode of the liquid cooling system 100 may be described by using examples with reference to FIG. 7a to FIG. 7d.

Operating mode 1: As shown in FIG. 7a, when an ambient temperature is moderate but heat dissipation needs to be performed on the battery 210, the liquid cooling system 100 may perform thermal management on the battery 210 through cooperation between the fluorine pump 31 in the fluorine pump module 30 and the heat dissipation module 20. Specifically, the water pump 12 is turned on, the electric heating assembly 14 is turned off, the first working medium in the coolant loop H1 circulates under driving of the water pump 12, and the first working medium takes away heat of the battery 210 by using the liquid cooling plate 220, to increase a temperature of the first working medium. The first throttle valve 13 is turned on, the second bypass valve 32 is turned off, the first bypass valve 51 is turned on, the compressor 40 is turned off, the second working medium in the refrigerant loop H2 circulates under driving of the fluorine pump 31, and the second working medium exchanges heat with the outside by using the second heat exchanger 21 and the fan 22. In the first heat exchanger 11, the first working medium in the first pipeline 111 and the second working medium in the second pipeline 112 exchange heat, to reduce a temperature of the first working medium. The second working medium takes away heat of the first working medium, the first working medium whose temperature is reduced continues to circulate through the coolant loop H1 and performs heat dissipation on the battery 210 by using the liquid cooling plate 220, and the second working medium whose temperature is increased continues to circulate through the refrigerant loop H2 and transfers heat to the external environment by using the second heat exchanger 21 and the fan 22, to implement heat dissipation on the battery 210. A flow direction of the first working medium in the coolant loop H1 in the first pipeline 111 is opposite to a flow direction of the second working medium in the refrigerant loop H2 in the second pipeline 112. In this operating mode, the liquid cooling system 100 can implement natural air cooling heat dissipation on the energy storage device through cooperation between the reversing valve module 50, the fluorine pump module 30, and the heat dissipation module 20. This saves energy and is efficient.

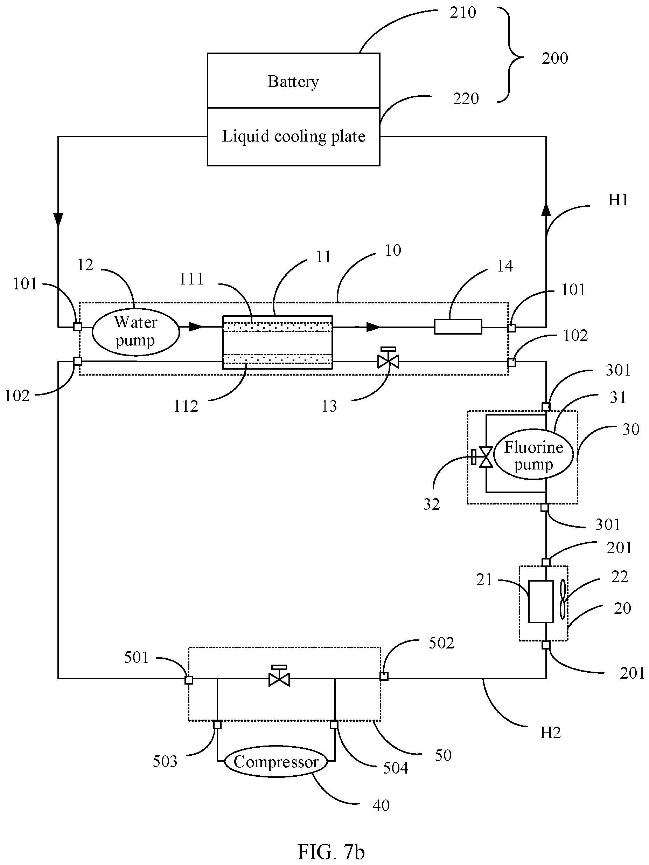

Operating mode 2: As shown in FIG. 7b, when an external ambient temperature is low and the battery 210 needs to be heated, the first throttle valve 13 is turned off, and circulation of the second working medium in the refrigerant loop H2 ends. The water pump 12 is turned on, the electric heating assembly 14 is turned on, the first working medium in the coolant loop H1 circulates under driving of the water pump 12, the electric heating assembly 14 heats the first working medium in the coolant loop H1, and the first working medium whose temperature is increased heats the battery 210 by using the liquid cooling plate 220, to ensure that a temperature of the battery 210 is at a proper operating temperature. In this operating mode, the refrigerant loop H2 is closed, and the battery 210 is heated by using the electric heating assembly 14 in a low-temperature environment. This is simple and efficient.

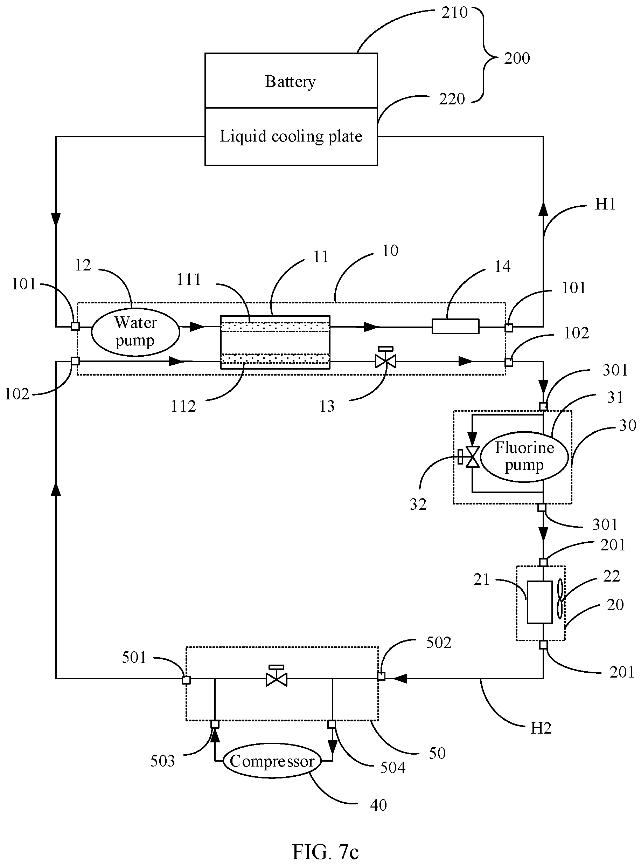

Operating mode 3: As shown in FIG. 7c, when an external ambient temperature is low and the battery 210 needs to be heated, the liquid cooling system 100 may implement a heat pump function through cooperation between the reversing valve module 50 and the compressor 40, to perform thermal management on the battery 210. Specifically, the first throttle valve 13 is turned on, the second bypass valve 32 is turned on, the compressor 40 is turned on, the second working medium in the refrigerant loop H2 circulates under driving of the fluorine pump 31, and a flow direction of the first working medium in the coolant loop H1 in the first pipeline 111 is the same as a flow direction of the second working medium in the refrigerant loop H2 in the second pipeline 112. The second working medium flows through the second bypass valve 32 and the compressor 40, the compressor 40 starts heating the second working medium to increase a temperature of the second working medium, and the second working medium directly flows to the thermal management module 10 to heat the first working medium, to increase a temperature of the first working medium. The first working medium whose temperature is increased continues to circulate through the coolant loop H1 and heats the battery 210 by using the liquid cooling plate 220, and the second working medium whose temperature is reduced continues to circulate through the refrigerant loop H2. In this operating mode, the electric heating assembly 14 is turned off, and the battery 210 is heated through heating by the compressor 40 in a low-temperature environment, so that efficiency is higher.

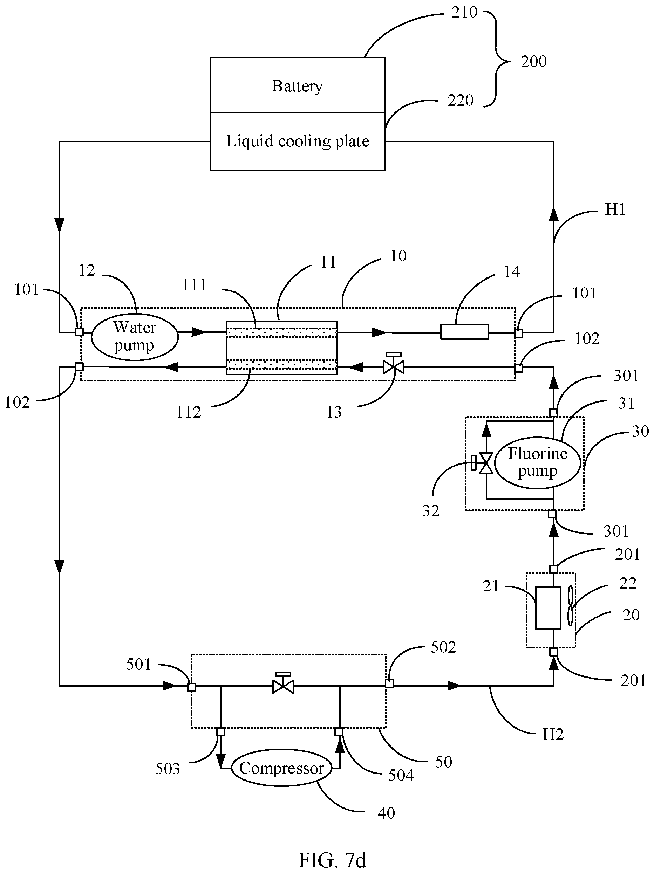

Operating mode 4: As shown in FIG. 7d, when an external ambient temperature is high and heat dissipation needs to be performed on the battery 210, the liquid cooling system 100 may implement a cooling function through cooperation between the reversing valve module 50 and the compressor 40, to perform thermal management on the battery 210. Specifically, the first throttle valve 13 is turned on, the second bypass valve 32 is turned on, the compressor 40 is turned on, the second working medium in the refrigerant loop H2 circulates under driving of the fluorine pump 31, and a flow direction of the first working medium in the coolant loop H1 in the first pipeline 111 is opposite to a flow direction of the second working medium in the refrigerant loop H2 in the second pipeline 112. The second working medium flows through the second bypass valve 32 and the compressor 40, and the compressor 40 starts cooling the second working medium to reduce a temperature of the second working medium. The second working medium absorbs heat of the external environment by using the second heat exchanger 21 and the fan 22. In the first heat exchanger 11, the first working medium in the first pipeline 111 and the second working medium in the second pipeline 112 exchange heat, to reduce a temperature of the first working medium. The first working medium in the coolant loop H1 and the second working medium in the refrigerant loop H2 exchange heat in the first heat exchanger 11 by using the first pipeline 111 and the second pipeline 112, so that the second working medium takes away heat of the first working medium, the first working medium whose temperature is reduced continues to circulate through the coolant loop H1 and performs heat dissipation on the battery 210 by using the liquid cooling plate 220, and the second working medium whose temperature is increased continues to circulate through the refrigerant loop H2. In this operating mode, the battery 210 is cooled through cooling by the compressor 40 in a high-temperature environment, and efficiency is higher.

It should be noted that, when the compressor 40 is used for heating, the first bypass valve 51 may be turned on to reduce pressure of the compressor 40, to prevent the compressor 40 from being faulty. When the compressor 40 performs cooling, the first bypass valve 51 may be turned off.

### Embodiment 3

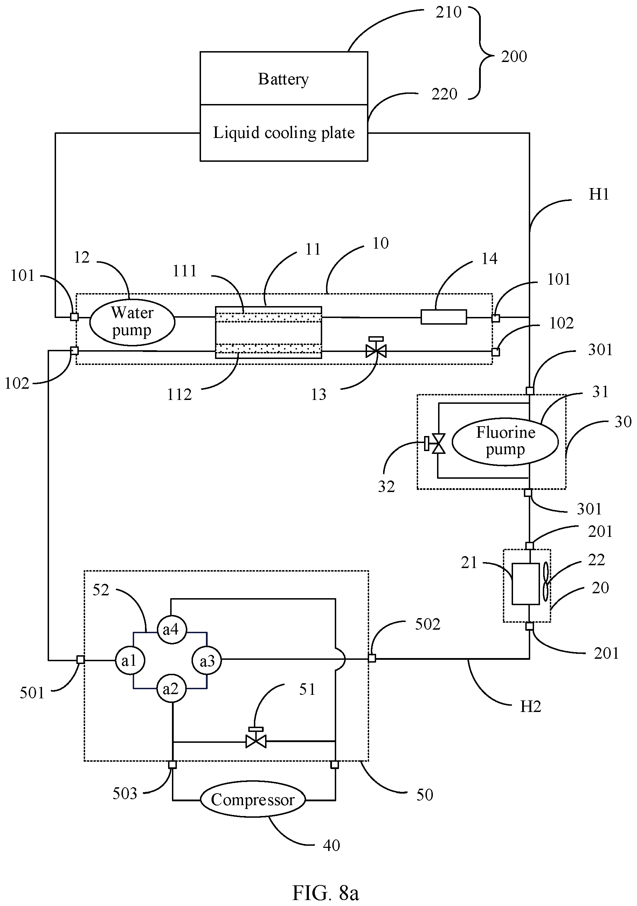

Based on the structure of the energy storage device shown in FIG. 5, as shown in FIG. 8a, an architecture of another energy storage device provided in this embodiment of this application is different from the architecture shown in FIG. 6 in that the reversing valve module 50 is a variant, and the reversing valve module 50 includes a four-way valve 52 and the first bypass valve 51. Two ends of the first bypass valve 51 are respectively connected to the third interface 503 and the fourth interface 504, so that the first bypass valve 51 and the compressor 40 are connected in parallel. The four-way valve 52 includes a first port a1, a second port a2, a third port a3, a fourth port a4, and a valve core, and the valve core is not shown herein. The first port a1 is connected to the first interface 501, the second port a2 is connected to the third interface 503, the third port a3 is connected to the fourth interface 504, and the fourth port a4 is connected to the third interface 503. The four-way valve 52 has a first state and a second state that respectively correspond to different connection states. The valve core is movably disposed in the four-way valve 52 to control the four-way valve 52 to switch between the first state and the second state. A flow direction and a path of the second working medium are adjusted through adjustment and control of the first bypass valve 51 and the four-way valve 52 and cooperation with the compressor 40.

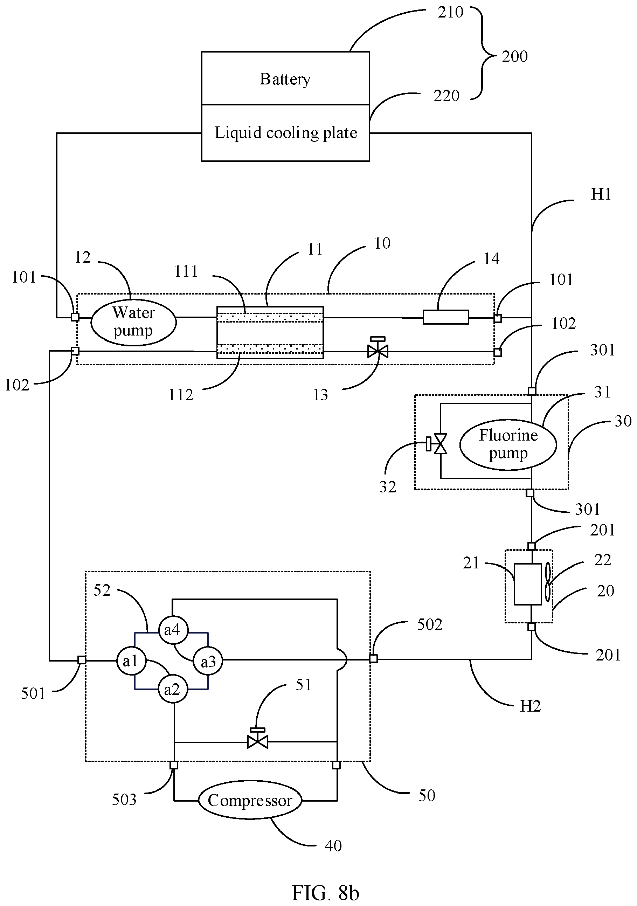

When the four-way valve 52 is in the first state, as shown in FIG. 8b, the first port a1 communicates with the second port a2, and the third port a3 communicates with the fourth port a4, so that a flowing path of the second working medium in the refrigerant loop H2 includes: the first interface 501-the first port a1-the second port a2-the first bypass valve 51 or the compressor 40-the fourth port a4-the third port a3-the second interface 502.

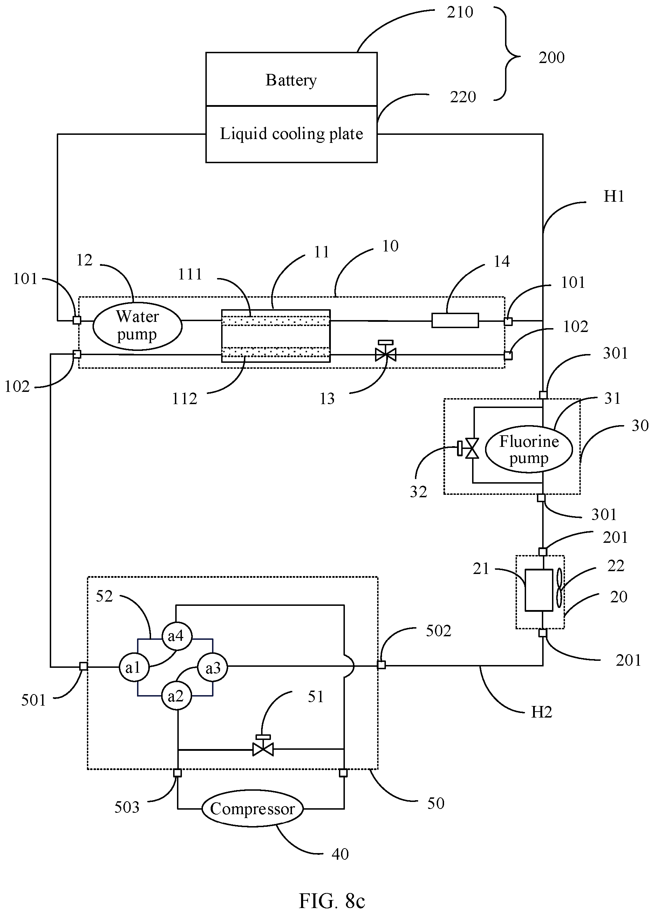

When the four-way valve 52 is in the second state, as shown in FIG. 8c, the first port a1 communicates with the fourth port a4, and the second port a2 communicates with the third port a3, so that a flowing path of the second working medium in the refrigerant loop H2 includes: the second interface 502-the third port a3-the second port a2-the first bypass valve 51 or the compressor 40-the fourth port a4-the first port a1-the first interface 501.

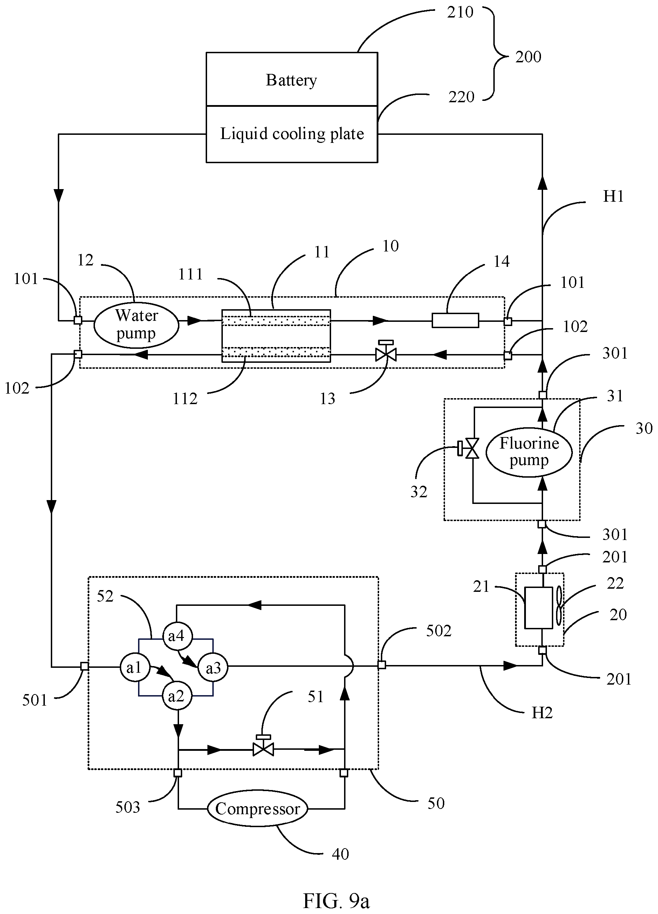

Based on the architectures of the energy storage device shown in FIG. 8a to FIG. 8c, an operating mode of the liquid cooling system 100 may be described with reference to FIG. 9a to FIG. 9d.

Operating mode 1: As shown in FIG. 9a, when an ambient temperature is not excessively high or excessively low and heat dissipation needs to be performed on the battery 210, the liquid cooling system 100 may perform thermal management on the battery 210 through cooperation between the fluorine pump 31 in the fluorine pump module 30 and the heat dissipation module 20. Specifically, the water pump 12 is turned on, the electric heating assembly 14 is turned off, the first working medium in the coolant loop H1 circulates under driving of the water pump 12, and the first working medium takes away heat of the battery 210 by using the liquid cooling plate 220, to increase a temperature of the first working medium. The first throttle valve 13 is turned on, the second bypass valve 32 is turned off, the first bypass valve 51 is turned on, the compressor 40 is turned off, and the second working medium in the refrigerant loop H2 circulates under driving of the fluorine pump 31. The four-way valve 52 is in the first state, and the second working medium enters the reversing valve module 50 from the first interface 501, successively passes through the first port al of the four-way valve 52, the second port a2, the first bypass valve 51, the fourth port a4, and the third port a3, and then flows out through the second interface 502. The second working medium exchanges heat with the outside by using the second heat exchanger 21 and the fan 22. In the first heat exchanger 11, the first working medium in the first pipeline 111 and the second working medium in the second pipeline 112 exchange heat, to reduce a temperature of the first working medium. The first working medium in the coolant loop H1 and the second working medium in the refrigerant loop H2 exchange heat in the first heat exchanger 11 by using the first pipeline 111 and the second pipeline 112, so that the second working medium takes away heat of the first working medium, the first working medium whose temperature is reduced continues to circulate through the coolant loop H1 and performs heat dissipation on the battery 210 by using the liquid cooling plate 220, and the second working medium whose temperature is increased continues to circulate through the refrigerant loop H2 and transfers heat to the external environment by using the second heat exchanger 21 and the fan 22, to implement heat dissipation on the battery 210. A flow direction of the first working medium in the coolant loop H1 in the first pipeline 111 is opposite to a flow direction of the second working medium in the refrigerant loop H2 in the second pipeline 112. In this operating mode, the liquid cooling system 100 can implement natural air cooling heat dissipation on the energy storage device through cooperation between the reversing valve module 50, the fluorine pump module 30, and the heat dissipation module 20. This saves energy and is efficient.

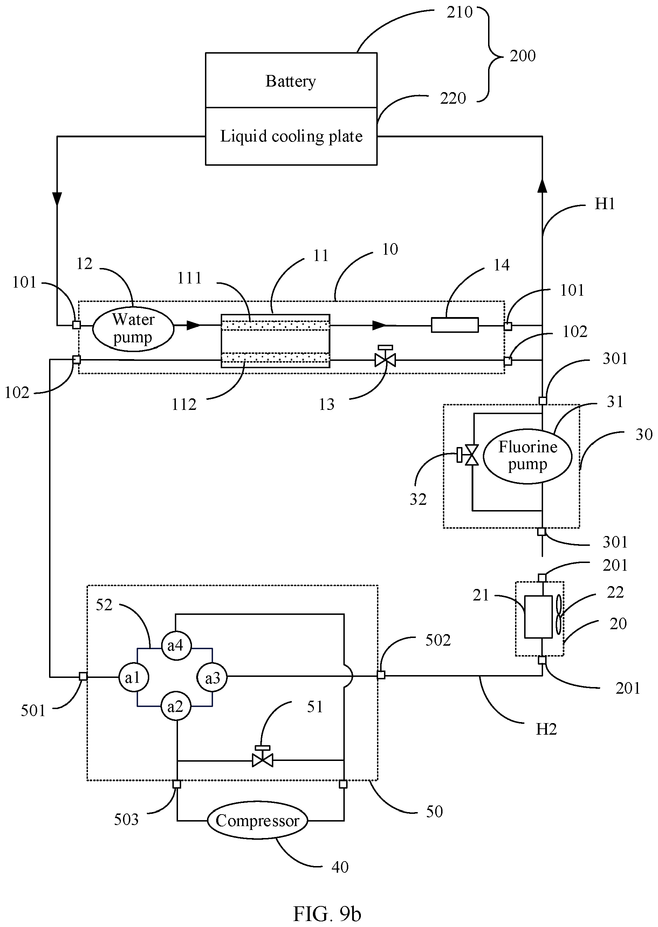

Operating mode 2: As shown in FIG. 9b, when an external ambient temperature is low, the liquid cooling system 100 may heat the battery 210 by using the electric heating assembly 14. Specifically, the first throttle valve 13 is turned off, and circulation of the second working medium in the refrigerant loop H2 ends. The water pump 12 is turned on, the electric heating assembly 14 is turned on, the first working medium in the coolant loop H1 circulates under driving of the water pump 12, the electric heating assembly 14 heats the first working medium in the coolant loop H1, and the first working medium whose temperature is increased heats the battery 210 by using the liquid cooling plate 220, to ensure that a temperature of the battery 210 is at a proper operating temperature. In this operating mode, the refrigerant loop H2 is closed, and the battery 210 is heated by using the electric heating assembly 14 in a low-temperature environment. This is simple and efficient.

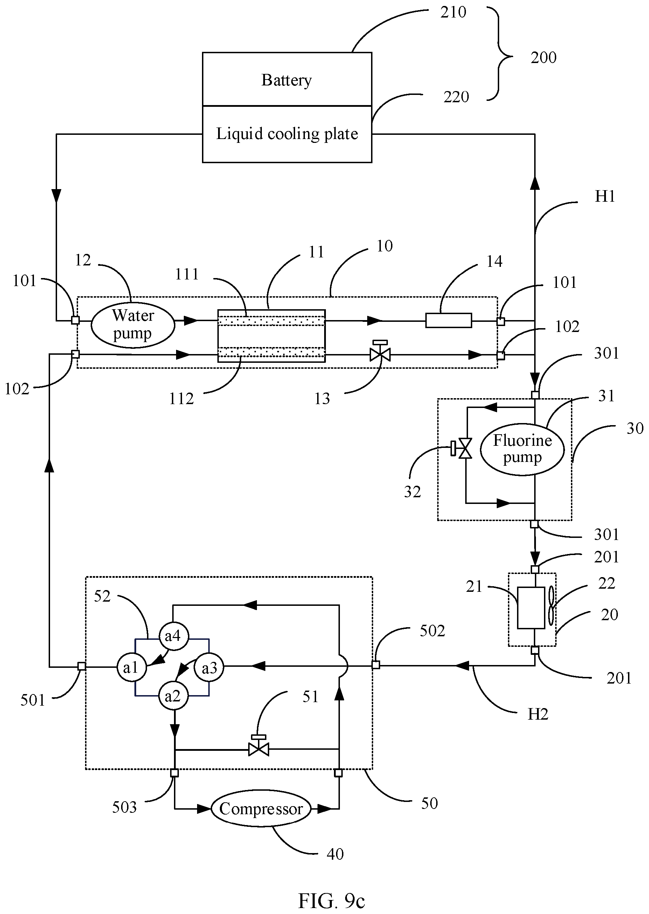

Operating mode 3: As shown in FIG. 9c, when an external ambient temperature is low and the battery 210 needs to be heated, the liquid cooling system 100 may implement a heat pump function through cooperation between the reversing valve module 50 and the compressor 40, to perform thermal management on the battery 210. Specifically, the first throttle valve 13 is turned on, and the second bypass valve 32 is turned on. The four-way valve 52 is in the second state, and the second working medium enters the reversing valve module 50 from the second interface 502, successively passes through the third port a3 of the four-way valve 52, the second port a2, the compressor 40, the fourth port a4, and the first port a1, and then flows out through the first interface 501. The compressor 40 starts heating the second working medium in the refrigerant loop H2, and the second working medium circulates. A flow direction of the first working medium in the coolant loop H1 in the first pipeline 111 is the same as a flow direction of the second working medium in the refrigerant loop H2 in the second pipeline 112. The second working medium flows through the second bypass valve 32 and the compressor 40, the compressor 40 starts heating the second working medium to increase a temperature of the second working medium, and the second working medium directly flows to the thermal management module 10 to exchange heat with the first working medium, to increase a temperature of the first working medium. The first working medium whose temperature is increased continues to circulate through the coolant loop H1 and heats the battery 210 by using the liquid cooling plate 220, and the second working medium whose temperature is reduced continues to circulate through the refrigerant loop H2. In this operating mode, the electric heating assembly 14 is turned off, and the battery 210 is heated through heating by the compressor 40 in a low-temperature environment, so that efficiency is higher.

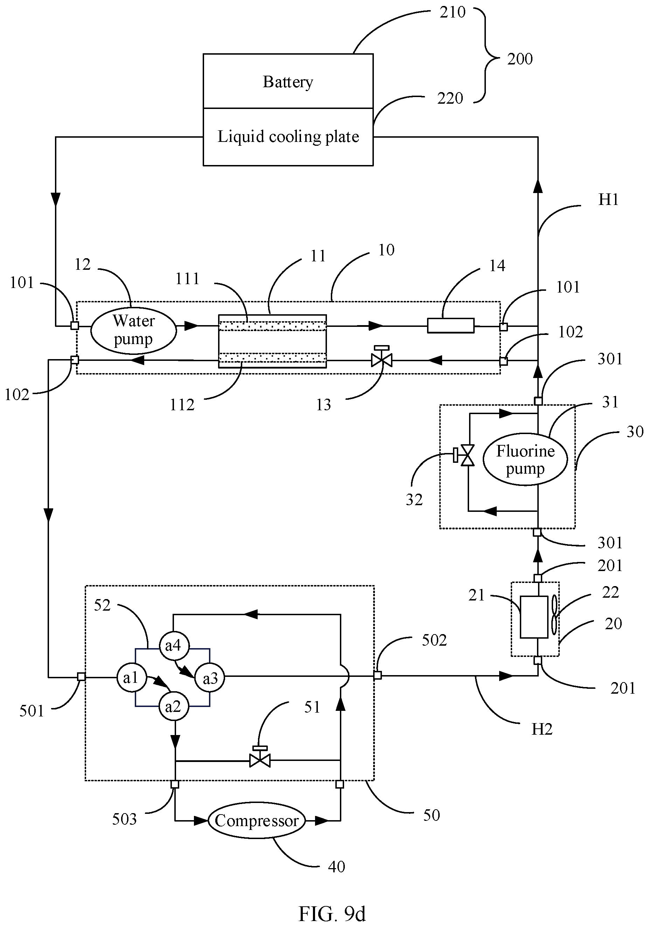

Operating mode 4: As shown in FIG. 9d, when an external ambient temperature is high and heat dissipation needs to be performed on the battery 210, the liquid cooling system 100 may implement a cooling function through cooperation between the reversing valve module 50 and the compressor 40, to perform thermal management on the battery 210. Specifically, the first throttle valve 13 is turned on, and the second bypass valve 32 is turned on. The four-way valve 52 is in the first state, and the second working medium enters the reversing valve module 50 from the first interface 501, successively passes through the first port a1 of the four-way valve 52, the second port a2, the first bypass valve 51, the fourth port a4, and the third port a3, and then flows out through the second interface 502. The compressor 40 starts cooling the second working medium in the refrigerant loop H2, and the second working medium circulates. A flow direction of the first working medium in the coolant loop H1 in the first pipeline 111 is opposite to a flow direction of the second working medium in the refrigerant loop H2 in the second pipeline 112. The second working medium exchanges heat with the outside by using the second heat exchanger 21 and the fan 22. In the first heat exchanger 11, the first working medium in the first pipeline 111 and the second working medium in the second pipeline 112 exchange heat, to reduce a temperature of the first working medium. The first working medium in the coolant loop H1 and the second working medium in the refrigerant loop H2 exchange heat in the first heat exchanger 11 by using the first pipeline 111 and the second pipeline 112, so that the second working medium takes away heat of the first working medium, the first working medium whose temperature is reduced continues to circulate through the coolant loop H1 and performs heat dissipation on the battery 210 by using the liquid cooling plate 220, and the second working medium whose temperature is increased continues to circulate through the refrigerant loop H2. In this operating mode, the battery 210 is cooled through cooling by the compressor 40 in a high-temperature environment, and efficiency is higher.

A function of the four-way valve 52 may alternatively be implemented by using a combination of four two-way valves or three three-way valves.

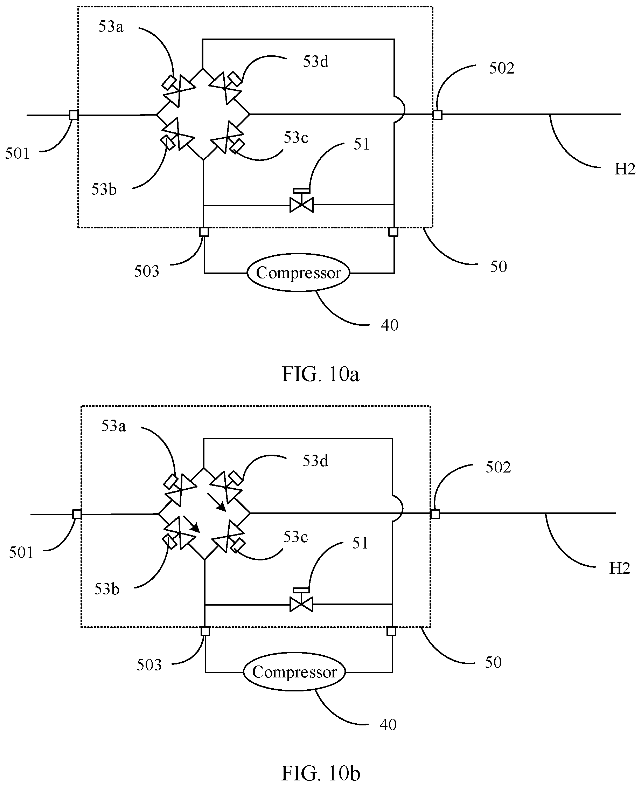

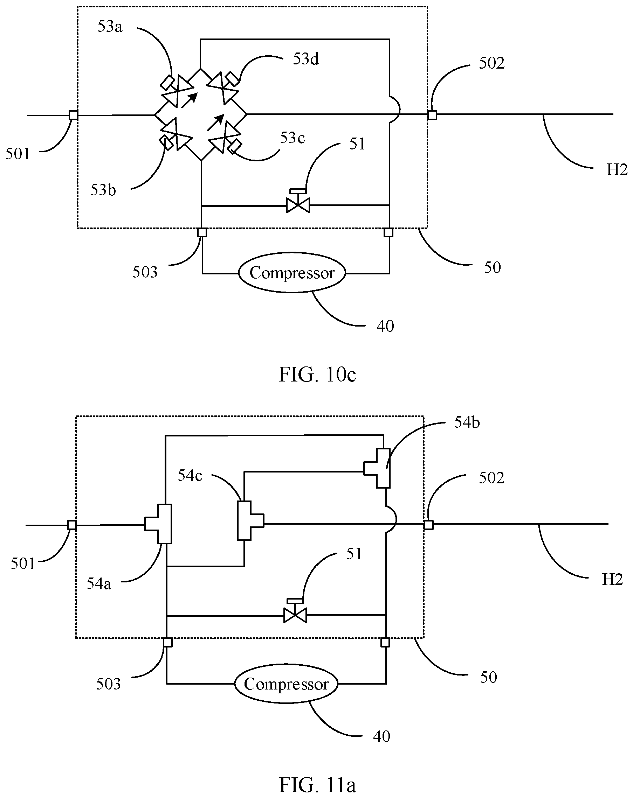

Four two-way valves shown in FIG. 10a are used as an example. The four two-way valves are respectively a two-way valve 53a, a two-way valve 53b, a two-way valve 53c, and a two-way valve 53d. As shown in FIG. 10b, when the two-way valve 53a and the two-way valve 53c are turned off, and the two-way valve 53b and the two-way valve 53d are turned on, the first interface 501 communicates with one side of the compressor 40, and the second interface 502 communicates with the other side of the compressor 40. A flowing path of the second working medium in the refrigerant loop H2 includes: the first interface 501-the two-way valve 53b-the compressor 40 or the first bypass valve 51-the two-way valve 53d-the second interface 502. As shown in FIG. 10c, when the two-way valve 53a and the two-way valve 53c are turned on, and the two-way valve 53b and the two-way valve 53d are turned off, the first interface 501 communicates with one side of the compressor 40, and the second interface 502 communicates with the other side of the compressor 40. A flowing path of the second working medium in the refrigerant loop H2 includes: the second interface 502-the two-way valve 53c-the compressor 40 or the first bypass valve 51-the two-way valve 53a-the first interface 501.

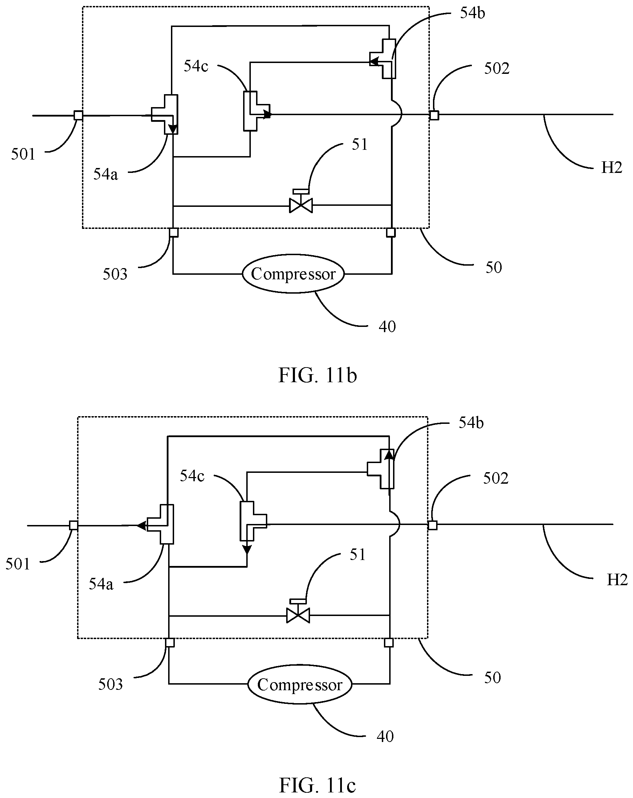

Two three-way valves shown in FIG. 11a are used as an example. The two three-way valves are respectively a three-way valve 54a, a three-way valve 54b, and a three-way valve 54c. As shown in FIG. 11b, the three-way valve 54a connects the first interface 501 and one side of the compressor 40, the three-way valve 54b connects the other side of the compressor 40 and the three-way valve 54c, and then the three-way valve 54c is connected to the second interface 502, so that a flowing path of the second working medium in the refrigerant loop H2 includes: the first interface 501-the two-way valve 53b-the compressor 40 or the first bypass valve 51-the two-way valve 53d-the second interface 502. As shown in FIG. 11c, the three-way valve 54c connects the second interface 502 and one side of the compressor 40, the three-way valve 54b connects the other side of the compressor 40 and the three-way valve 54a, and then the three-way valve 54c is connected to the first interface 501, so that a flowing path of the second working medium in the refrigerant loop H2 includes: the second interface 502-the two-way valve 53c-the compressor 40 or the first bypass valve 51-the two-way valve 53a-the first interface 501.

Certainly, the function of the four-way valve 52 may alternatively be implemented by using another structure. An example is not provided herein again.

### Embodiment 4

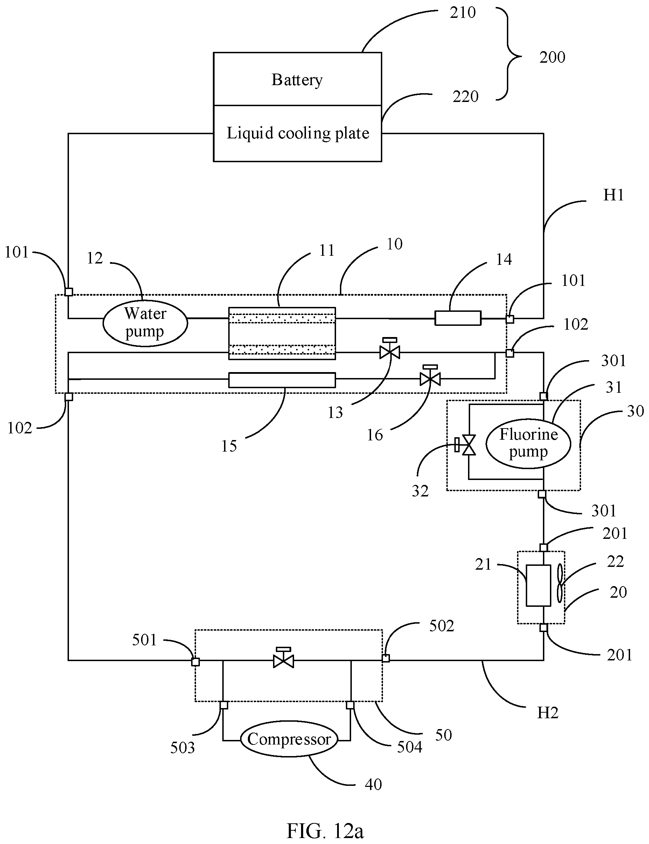

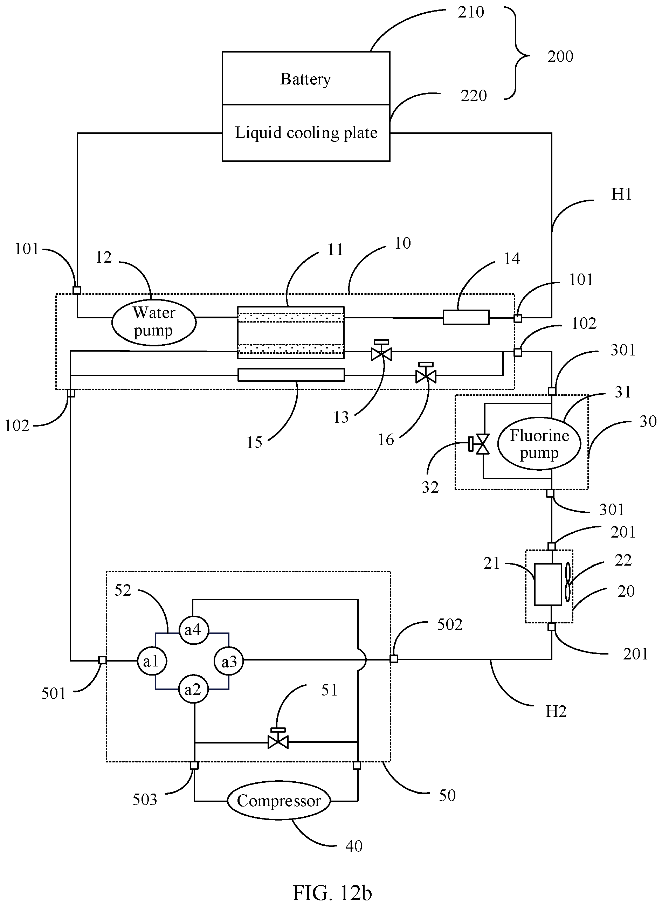

Based on the structure of the energy storage device shown in FIG. 5, as shown in FIG. 12a and FIG. 12b, in another energy storage device provided in this embodiment of this application, the thermal management module 10 further includes a dehumidification module 15. Two ends of the dehumidification module 15 are respectively connected to the two cooling interfaces 102 of the thermal management module 10, and it may be considered that the dehumidification module 15 is connected in parallel to two ends of the first heat exchanger 11. For example, a second throttle valve 16 may be disposed between the dehumidification module 15 and one of the cooling interfaces 102 that is configured to connect to the fluorine pump module 30, and the second throttle valve 16 is configured to control a flow volume of the second working medium flowing through the dehumidification module 15. When an air temperature in the energy storage device is lower than a dew point temperature, the dehumidification module 15 can operate to condense water vapor in the energy storage device into water. This reduces humidity of the energy storage device.

It should be understood that, other than the dehumidification module 15 and the second throttle valve 16, other structures in FIG. 12a are similar to the structures of the energy storage device shown in FIG. 6, and other structures in FIG. 12b are similar to the structures of the energy storage device shown in FIG. 8a. Details are not described herein again. In a specific operating mode, the dehumidification module 15 may be turned on to operate in all modes in which the compressor 40 is turned on.

In conclusion, in the energy storage device provided in this embodiment of this application, the liquid cooling system 100 is of a modular structure, so that an integrated design is implemented. This facilitates structural arrangement of the energy storage device. Each module may be used as an independent functional unit, and can implement operations independently and connect to the coolant loop H1 or the refrigerant loop H2 through an interface to play a role through a combination. For different environments, different modules may be selected to cooperate to implement different operating modes, to improve thermal processing energy efficiency of the liquid cooling system 100. This improves operating energy efficiency of the energy storage device.

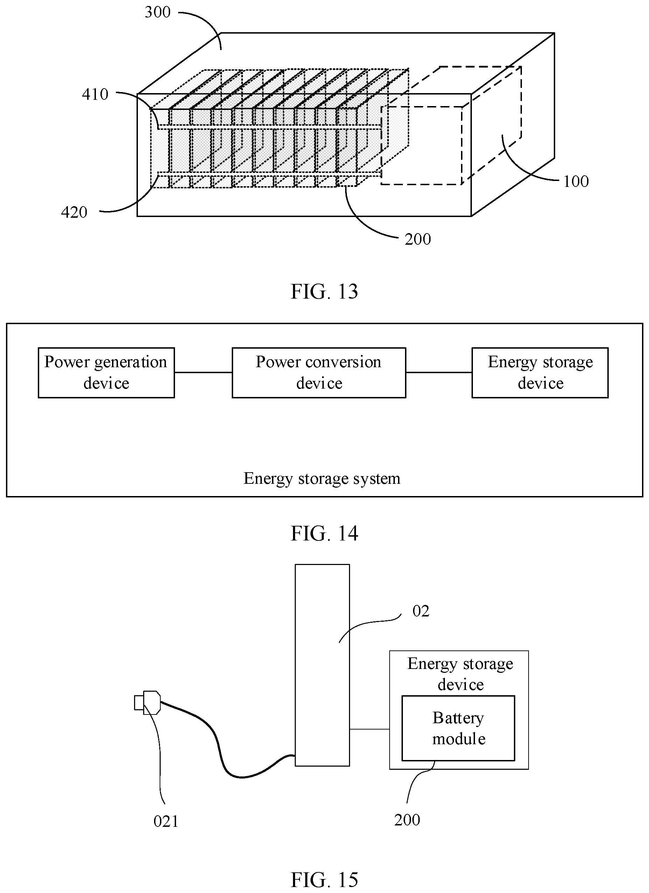

The energy storage device provided in this embodiment of this application may be an energy storage cabinet. As shown in FIG. 13, the energy storage cabinet includes a cabinet body 300 and the liquid cooling system 100 and a plurality of battery modules 200 that are accommodated in the cabinet body 300. The liquid cooling system 100 includes a liquid outlet pipeline 410 and a liquid inlet pipeline 420, and the plurality of battery modules 200 are connected in parallel between the liquid outlet pipeline 410 and the liquid inlet pipeline 420. The first working medium in the coolant loop H1 may flow into each battery module 200 through the liquid outlet pipeline 410, to perform thermal management on the battery 210 in the battery module 200, and the first working medium may return to the liquid cooling system 100 through the liquid inlet pipeline 420 after exchanging heat with the battery 210.

As shown in FIG. 14, an embodiment of this application further provides an energy storage system. The energy storage system may include a power generation device, a power conversion device, and the foregoing energy storage device. The power conversion device is connected between the power generation device and the energy storage device, and the power generation device is configured to store generated electric energy into the battery 210 of the energy storage device by using the power conversion device.

In addition, the energy storage system may further include a battery management system. The battery management system may effectively detect parameters such as a temperature, a state of charge, and a state of health of the battery 210, and may further effectively regulate and control a charging and discharging function of the battery 210, to ensure normal operation of the energy storage device.

During specific application, the power generation device may be a photovoltaic power generation device, a wind energy power generation device, or the like. A specific type of the power generation device is not limited in this application. In addition, during actual application, the power generation device and the battery may alternatively be connected by using a power distribution cabinet. The power distribution cabinet may include a direct current-alternating current conversion device, or may include a device such as a transformer, to facilitate effectively transmitting electric energy generated by the power generation device to the battery for storage. During specific disposition, a quantity and a type of devices in the power distribution cabinet may be properly specified according to an actual requirement. This is not limited in this application.

As shown in FIG. 15, an embodiment of this application further provides a charging network. The charging network includes a charging pile 02 and the energy storage device. The charging pile 02 is electrically connected to the battery module 200 of the energy storage device through a cable, and the battery module 200 may provide electric energy stored in the battery module 200 to the charging pile 02. The charging pile 02 includes a connector 021, and the connector 021 may be connected to a powered device (for example, a vehicle), to supply energy to the powered device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A liquid cooling system, wherein the liquid cooling system comprises a refrigerant loop, the refrigerant loop is configured for a second working medium to flow in, and the liquid cooling system further comprises a thermal management module, a heat dissipation module, and a fluorine pump module;
the thermal management module comprises two liquid cooling interfaces and two cooling interfaces, the two liquid cooling interfaces are configured for a first working medium to flow between, the two liquid cooling interfaces are configured to connect to a load, and the two cooling interfaces are connected in series to the refrigerant loop;
the heat dissipation module comprises two heat dissipation interfaces, and the two heat dissipation interfaces are connected in series to the refrigerant loop; and
the fluorine pump module comprises two fluorine pump interfaces, the two fluorine pump interfaces are connected in series to the refrigerant loop, and the fluorine pump module is connected between the thermal management module and the heat dissipation module.

2. The liquid cooling system according to claim 1, wherein the liquid cooling system further comprises a compressor and a reversing valve module, the compressor is connected between the thermal management module and the heat dissipation module, the reversing valve module comprises a first interface, a second interface, a third interface, and a fourth interface, the first interface and the second interface are connected to the refrigerant loop, the compressor is separately connected to the third interface and the fourth interface, and the reversing valve module is configured to control a flow direction of the second working medium.

3. The liquid cooling system according to claim 2, wherein the reversing valve module comprises a first bypass valve, and the first bypass valve is connected in parallel to two ends of the compressor.

4. The liquid cooling system according to claim 2 or 3, wherein the reversing valve module further comprises a four-way valve, the four-way valve comprises a first port, a second port, a third port, a fourth port, and a valve core, the first port is connected to the first interface, the second port is connected to the third interface, the third port is connected to the fourth interface, and the fourth port is connected to the second interface; and
the four-way valve has a first state and a second state; when the four-way valve is in the first state, the first port communicates with the second port, and the third port communicates with the fourth port; or when the four-way valve is in the second state, the first port communicates with the fourth port, and the second port communicates with the third port; and the valve core is movably disposed in the four-way valve to control the four-way valve to switch between the first state and the second state.

5. The liquid cooling system according to any one of claims 1 to 4, wherein the fluorine pump module comprises a fluorine pump, and the fluorine pump is connected between the two fluorine pump interfaces.

6. The liquid cooling system according to claim 5, wherein the fluorine pump module further comprises a second bypass valve, and the second bypass valve is connected in parallel to two ends of the fluorine pump.

7. The liquid cooling system according to any one of claims 1 to 6, wherein the thermal management module comprises a water pump and a first heat exchanger; and
the first heat exchanger comprises a first pipeline and a second pipeline, the water pump and the first pipeline are connected in series between the two liquid cooling interfaces, and two ends of the second pipeline are respectively connected to the two cooling interfaces.

8. The liquid cooling system according to claim 7, wherein the thermal management module further comprises a dehumidification module, and two ends of the dehumidification module are respectively connected to the two cooling interfaces.

9. The liquid cooling system according to claim 8, wherein a second throttle valve is disposed between the dehumidification module and the cooling interface that is configured to connect to the fluorine pump module.

10. The liquid cooling system according to any one of claims 7 to 9, wherein the thermal management module further comprises an electric heating assembly, and the electric heating assembly is connected between the two liquid cooling interfaces and is connected in series to the first heat exchanger.

11. The liquid cooling system according to any one of claims 7 to 10, wherein a first throttle valve is disposed between the first heat exchanger and the cooling interface that is configured to connect to the fluorine pump module.

12. The liquid cooling system according to any one of claims 1 to 11, wherein the heat dissipation module comprises a second heat exchanger and a fan, two ends of the second heat exchanger are respectively connected to the heat dissipation interfaces, and the fan is disposed on one side of the second heat exchanger.

13. An energy storage device, comprising at least one battery module and the liquid cooling system according to any one of claims 1 to 12, wherein two ends of each battery module are respectively connected to the two liquid cooling interfaces.

14. The energy storage device according to claim 13, wherein each battery module comprises a battery and a liquid cooling plate, a liquid inlet and a liquid outlet of the liquid cooling plate are respectively connected to the two liquid cooling interfaces, and the liquid cooling plate is in thermal contact with the battery.

15. The energy storage device according to claim 13 or 14, further comprising a cabinet body, wherein the at least one battery module and the liquid cooling system are accommodated in the cabinet body.

16. An energy storage system, comprising a power generation device, a power conversion device, and the energy storage device according to any one of claims 13 to 15, wherein the power conversion device is connected between the power generation device and the energy storage device, and the power generation device is configured to store generated electric energy into the battery module of the energy storage device by using the power conversion device.

17. A charging network, comprising a charging pile and the energy storage device according to any one of claims 13 to 15, wherein the charging pile is electrically connected to the energy storage device, and the energy storage device is configured to provide electric energy to the charging pile.
